(19) **Europäisches Patentamt / European Patent Office / Office européen des brevets**

(11) **EP 3 347 161 B1**

(12) # EUROPÄISCHE PATENTSCHRIFT

(45) Veröffentlichungstag und Bekanntmachung des Hinweises auf die Patenterteilung:
**13.11.2019 Patentblatt 2019/46**

(21) Anmeldenummer: **16757011.8**

(22) Anmeldetag: **24.08.2016**

(51) Int Cl.:
***B23Q 1/76*** (2006.01)

(86) Internationale Anmeldenummer:
**PCT/EP2016/069948**

(87) Internationale Veröffentlichungsnummer:
**WO 2017/042031 (16.03.2017 Gazette 2017/11)**

(54) **BETÄTIGUNGSVORRICHTUNG FÜR EINE LÜNETTE**

ACTUATING DEVICE FOR A STEADY REST

DISPOSITIF D'ACTIONNEMENT POUR UNE LUNETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.09.2015 DE 102015115205**

(43) Veröffentlichungstag der Anmeldung:
**18.07.2018 Patentblatt 2018/29**

(73) Patentinhaber: **Walter Maschinenbau GmbH**
**72072 Tübingen (DE)**

(72) Erfinder:
• **NUBER, Wolfgang**
**72108 Rottenburg (DE)**
• **WOLGRAM, Stefan**
**72581 Dettingen (DE)**

(74) Vertreter: **Rüger Abel Patentanwälte PartGmbB**
**Patentanwälte**
**Webergasse 3**
**73728 Esslingen a. N. (DE)**

(56) Entgegenhaltungen:
**EP-A1- 2 058 084      EP-A1- 2 848 359**
**US-A1- 2008 139 092      US-B1- 6 257 972**

**Beschreibung**

Die Erfindung betrifft eine Betätigungsvorrichtung für eine Lünette. Die Betätigungsvorrichtung dient dazu, die Lünette zu betätigen, um die Lünette zwischen einer Abstützstellung oder Klemmstellung einerseits und einer Lösestellung andererseits umzuschalten. In der Abstützstellung bzw. Klemmstellung liegt wenigstens ein Backen der Lünette an einem zu bearbeitenden Werkstück an. Beispielsweise kann ein zylindrisches Werkstück radial zu seiner Längsachse durch mehrere und insbesondere drei Backen der Lünette geklemmt bzw. gehalten werden, wenn die Lünette sich in der Abstützstellung bzw. Klemmstellung befindet.

Eine solche Lünette ist beispielsweise aus DE 60 208 835 T2 bekannt. Ein Körper - der ein Eingangsteil der Lünette darstellt - ist in dem Gehäuse der Lünette angeordnet und wird durch einen Hydraulikzylinder bewegt. Diese Bewegung wird durch ein Lünettengetriebe in die Bewegung der drei Backen der Lünette umgesetzt. Dadurch wird zentrische eine 3-Punkt-Abstützung des Werkstücks erreicht.

Zur Bewegung des Eingangsteils dient ein Hydraulikzylinder. Über das Hydraulikmedium kann eine ausreichend hohe Kraft bereitgestellt werden. Zudem bildet die Hydraulikflüssigkeit eine starre Säule und kann während der Bearbeitung des Werkstücks die Kraft, die gegebenenfalls über das Getriebe auf den vom Hydraulikzylinder zu bewegenden Körper zurückwirkt, problemlos abstützen. Über den Volumenstrom der Hydraulikflüssigkeit lässt sich die Geschwindigkeit der Bewegung des Körpers der Lünette und mithin die Geschwindigkeit der Bewegung der Backen sehr gut steuern. Bislang wird deswegen ausschließlich Hydraulikmedium zur Betätigung des Eingangsteils der Lünette verwendet. Dazu muss eine Werkzeugmaschine für die Lünette ein Hydraulikkreislauf bereitstellen.

Aus US 6,257,972 B1 ist ebenfalls eine hydraulische Betätigungsvorrichtung für eine Lünette bekannt. Die Betätigungsvorrichtung hat einen Träger mit einer Anbringungsseite zum Anbringen der Lünette. Ein Betätigungsteil ist linear verschiebbar gelagert und weist an einem Ende eine Verbindungseinrichtung zur Verbindung mit einem Eingangsteil der Lünette auf. Am Träger ist ein doppelt wirkender Hydraulikzylinder angeordnet. Dessen Kolben ist über eine Kopplungseinrichtung mit dem Betätigungsteil bewegungsgekoppelt. Die Kopplungseinrichtung hat einen mit dem Kolben verbundenen rechtwinklig zur Verschiebungsrichtung des Betätigungsteils verschiebbaren Schieber. Der Schieber hat Nocken, die in einer Kulisse des Betätigungsteils geführt sind. Die Kulisse ist schräg zur Verschiebungsrichtung des Schiebers und schräg zur Verschiebungsrichtung des Betätigungsteils ausgerichtet.

Es kann daher als Aufgabe der Erfindung angesehen werden, eine Betätigungsvorrichtung für eine Lünette zu schaffen, die ohne die Verwendung von Hydraulikflüssigkeit auskommt.

Diese Aufgabe wird durch eine Betätigungsvorrichtung mit den Merkmalen des Patentanspruches 1 gelöst.

Die Betätigungsvorrichtung hat einen Träger mit einer Anbringungsseite, die dazu eingerichtet ist, die Lünette anzubringen. Die Anbringungsseite stellt eine Schnittstelle dar, mit der die Betätigungsvorrichtung an einer Lünette angekoppelt werden kann.

Die Betätigungsvorrichtung hat ein Betätigungsteil, das an dem Träger in einer Höhenrichtung bewegbar gelagert ist. Das Betätigungsteil hat in Höhenrichtung ein äußeres Ende sowie ein inneres Ende. Das äußere Ende ist der Anbringungsseite bzw. der Lünette zugeordnet und weist eine Verbindungseinrichtung auf, die dazu eingerichtet ist, mit einem Eingangsteil der Lünette verbunden zu werden. Die Bewegung des Eingangsteils in Höhenrichtung verursacht das Bewegen der Backen der Lünette zum Werkstück hin bzw. vom Werkstück weg.

An dem Träger ist außerdem ein doppelt wirkender Pneumatikzylinder befestigt. Der Pneumatikzylinder hat einen Kolben, der den Zylinderinnenraum in zwei Arbeitskammern fluiddicht unterteilt. Der Kolben ist über eine Kopplungseinrichtung der Betätigungsvorrichtung mit dem Betätigungsteil bewegungsgekoppelt. Der Kolben bewegt sich vorzugsweise in einer Längsrichtung, die rechtwinklig zur Höhenrichtung ausgerichtet ist.

Die Kopplungseinrichtung hat einen mit dem Kolben des Pneumatikzylinders, beispielsweise über eine Kolbenstange, verbundenen Schieber. Der Schieber ist in Längsrichtung bewegbar am Träger gelagert. An dem Schieber ist wenigstens eine Kulisse vorhanden. Die Kulisse definiert eine schräg zu der Höhenrichtung und schräg zu der Längsrichtung verlaufende Kulissenbahn, in der ein zugeordnetes Kulissenelement der Kopplungseinrichtung geführt bewegbar angeordnet ist. Das wenigstens eine Kulissenelement ist mit dem inneren Ende des Betätigungsteils verbunden. Die Kulissenbahn schließt mit der Längsrichtung einen Neigungswinkel ein, der kleiner ist als 45° und vorzugsweise kleiner als 30° und weiter vorzugsweise kleiner als 20°.

Das Betätigungsteil ist insbesondere nur in einzigen Freiheitsgrad in Höhenrichtung bewegbar. Der Schieber ist insbesondere nur in einem Freiheitsgrad in Längsrichtung bewegbar. Das wenigstens eine Kulissenelement ist vorzugsweise relativ zum Betätigungsteil in Höhen- und Längsrichtung unbeweglich mit dem Betätigungsteil verbunden.

Über die Kopplungseinrichtung wird eine vom Pneumatikzylinder bereitgestellte und in Längsrichtung wirkende Pneumatikkraft in eine in Höhenrichtung wirkende vom Betätigungsteil auf die Lünette übertragbare Betätigungskraft übersetzt. Die Betätigungskraft ist somit größer als die Pneumatikkraft. Der Weg wird dabei vom Pneumatikzylinder zum Betätigungsteil untersetzt, so dass der Weg des Kolbens größer ist als der Weg, den das Betätigungsteil zurücklegt. Über die Kopplungseinrichtung kann eine Betätigungskraft in Ausfahrrichtung des Betätigungsteils sowie in Einfahrrichtung übertragen werden.

Durch die Reibung in der Kopplungseinrichtung wird für den Pneumatikzylinder eine der Pneumatikkraft entgegengesetzt gerichtete Reibungskraft erzeugt. Die Gleitreibungskraft ist vorzugsweise größer als ein vorgegebener Mindestwert, der abhängig von der vom Pneumatikzylinder bereitgestellten Pneumatikkraft ermittelt werden kann. Die Reibpaarungen in der Kopplungseinrichtung können entsprechend gewählt werden. Durch die reibungsbehaftete Kopplungseinrichtung wird sozusagen immer eine Mindestlast auf den Pneumatikzylinder ausgeübt.

Die Betätigungsvorrichtung kann für bekannte hydraulisch betätigte Lünetten eingesetzt werden und den dort vorhandenen Hydraulikzylinder wahlweise durch die pneumatisch betätigte Betätigungsvorrichtung ersetzen. Über die Anordnung des Pneumatikzylinders und der Verbindung des Pneumatikzylinders mit dem Betätigungsteil über die Kopplungseinrichtung können dieselben Kräfte am Betätigungsteil erreicht werden, wie mit der hydraulischen direkten Betätigung des Eingangsteils der Lünette. Durch die Kopplung des Pneumatikzylinders über die Kopplungseinrichtung mit dem Betätigungsteil und der der Pneumatikkraft entgegen wirkenden Gleitreibungskraft lassen sich schlagartige Ausfahrbewegungen des Betätigungsteils und mithin schlagartige Bewegungen der Backen der Lünette vermeiden. Wegen der Kompressibilität der Luft, die zur Bewegung des Kolbens im Pneumatikzylinder verwendet wird, war dies nicht zu erwarten gewesen.

Es ist bevorzugt, wenn die Gleitreibungspaare in der Kopplungseinrichtung so gewählt werden, dass der Unterschied zwischen der Haftreibung bzw. dem Haftreibungskoeffizienten und der Gleitreibung bzw. dem Gleitreibungskoeffizienten der Kopplungseinrichtung kleiner ist als ein vorgegebener Differenzwert von 0,1.

Es ist vorteilhaft, wenn der Neigungswinkel um zumindest 2° bis 3° kleiner ist als es durch die folgende Gleichung angegeben ist:

$$FH_{soll} = FL_{max} \left( \sin \alpha \right)\left( \cos \alpha \right)$$

wobei $FH_{soll}$ die vorgegebene, erforderlich Betätigungskraft in Höhenrichtung am Betätigungsteil ist, $FL_{max}$ die vorgegebene maximale Pneumatikkraft in Längsrichtung des Pneumatikzylinders ist und $\alpha$ der Neigungswinkel der Kulissenbahn ist.

Bei einer bevorzugten Ausführungsform hat der Schieber zwei in einer Querrichtung rechtwinklig zu der Längsrichtung und zu der Höhenrichtung mit Abstand zueinander angeordnete Kulissen.

Jede Kulisse am Schieber ist vorzugsweise durch eine Nut oder einen Schlitz gebildet. Es ist bevorzugt, wenn der Neigungswinkel der Kulissenbahn konstant ist und sich die Kulissenbahn geradlinig erstreckt.

Das Betätigungsteil ist bei einer bevorzugten Ausführungsform oberhalb des Schiebers mittels einer Gleitlagerbuchse an dem Träger gelagert. Die Gleitlagerbuchse kann im Anschluss an die Anbringungsseite angeordnet sein. Die Länge der Gleitlagerbuchse in Höhenrichtung ist kleiner als die des Betätigungsteils, so dass abhängig von der Position des Betätigungsteils nur ein Abschnitt innerhalb der Gleitlagerbuchse geführt ist.

Das Betätigungsteil weist an seinem inneren Ende eine Abstützeinrichtung auf, mittels der sich das Betätigungsteil in Längsrichtung am Träger abstützt. Zur Abstützung ist eine Wälzlageranordnung vorgesehen sein, um die Reibungskraft bei der Bewegung des Betätigungsteils in Höhenrichtung zu minimieren. Die Wälzlagerung wirkt zwischen dem Abstützteil und dem Träger.

Das Abstützteil erstreckt sich vorzugsweise in einer Querrichtung rechtwinklig zu der Längsrichtung und zu der Höhenrichtung vom inneren Ende des Betätigungsteils auf zwei Seiten weg. Dabei kann es sich bevorzugt durch die beiden am Schieber vorhandenen Kulissen hinein oder hindurch erstrecken. Es ist weiter bevorzugt, wenn sich das Abstützteil durch die Kulissen hindurch erstreckt und am jeweiligen freien Ende mit einem zugeordneten Wälzlager der Wälzlageranordnung verbunden ist. Dabei können an dem Abstützteil die Kulissenelemente angeordnet oder gebildet sein, die sich in der jeweiligen Kulisse befinden.

Es ist weiter bevorzugt, wenn sich jedes Wälzlager der Wälzlageranordnung an wenigstens einer Stützfläche abstützt, die rechtwinklig zu der Längsrichtung ausgerichtet ist. Der Normalenvektor der Stützfläche erstreckt sich demnach in Längsrichtung. Es ist bevorzugt, wenn jedes Wälzlager zumindest teilweise innerhalb einer Nut angeordnet ist, die sich am Träger in Höhenrichtung erstreckt und wobei die Nutflanken jeweils eine Stützfläche bilden. Dabei ist der Abstand der Nutflanken bzw. der Stützflächen um ein notwendiges minimales Spiel größer als der Außendurchmesser des Wälzlagers.

Vorzugsweise ist der Schieber mit einer Unterseite gleitend verschiebbar auf einer Lauffläche gelagert. Die Unterseite und die Lauffläche werden zur Bildung einer Gleitpaarung bearbeitet und sind bei einem bevorzugten Ausführungsbeispiel nitriert. Dabei kann der Schieber insgesamt nitriert sein.

Bei einer weiteren vorteilhaften Ausführung weist der Träger ein geschlossenes Gehäuse auf, in dem der Schieber angeordnet ist. Das Gehäuse des Trägers kann fluiddicht ausgeführt sein, so dass keine Partikel durch Kühlflüssigkeit, Späne oder dergleichen in das Gehäuse gelangen können.

Jede vorhandene Kulisse kann zwei parallel zueinander verlaufende Kulissenflächen aufweisen, zwischen denen die Kulissenbahn definiert ist. Das Kulissenelement wird in dem Spalt zwischen den beiden Kulissenflächen geführt.

Vorteilhafte Ausführungsbeispiele der Betätigungsvorrichtung ergeben sich aus den abhängigen Patentansprüchen, der Beschreibung und der Zeichnungen. Nachfolgend werden bevorzugte Ausführungsbeispiele anhand der Zeichnungen im Detail erläutert. Es zeigen:

Fig. 1 eine schematische Darstellung einer Lünette und einem Ausführungsbeispiel der Betätigungsvorrichtung,

Fig. 2 die Betätigungsvorrichtung und die Lünette aus Fig. 1 in einem Schnittbild rechtwinklig zu einer Längsrichtung gemäß der Schnittlinie II-II in Fig. 1,

Fig. 3 die Betätigungsvorrichtung gemäß der Fig. 1 und 2 in einer teilgeschnittenen Seitenansicht,

Fig. 4 eine schematische Darstellung eines Wälzlagers im Schnittbild rechtwinklig zu einer Höhenrichtung,

Fig. 5 eine perspektivische Teildarstellung der Betätigungsvorrichtung und insbesondere eines Schiebers und des Betätigungsteils der Betätigungsvorrichtung,

Fig. 6 eine perspektivische Veranschaulichung eines Ausführungsbeispiels eines Betätigungsteils und

Fig. 7 das Betätigungsteil aus Fig. 6 in mit einem Ausführungsbeispiel eines Schiebers der Betätigungsvorrichtung gekoppeltem Zustand in perspektivischer Darstellung.

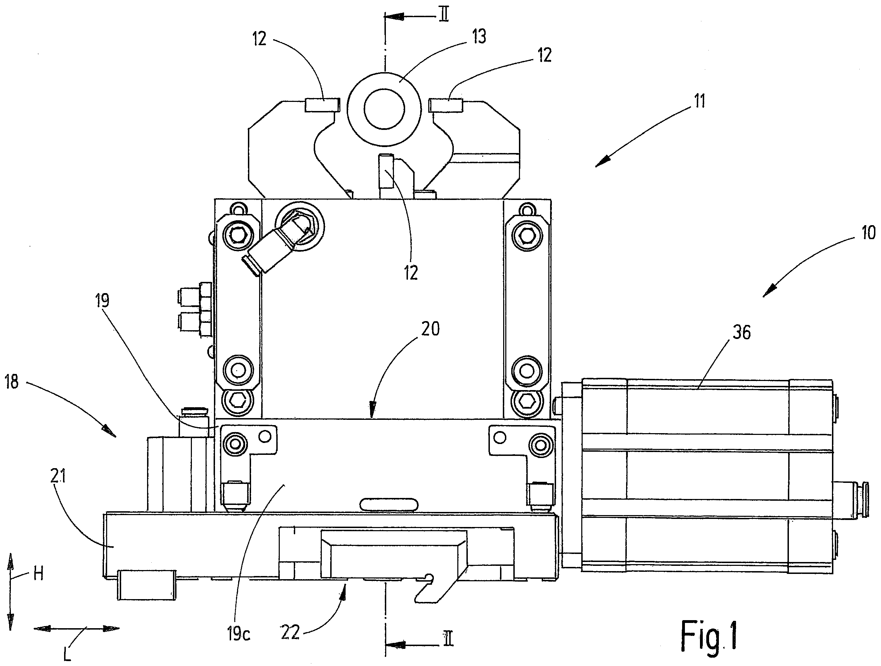

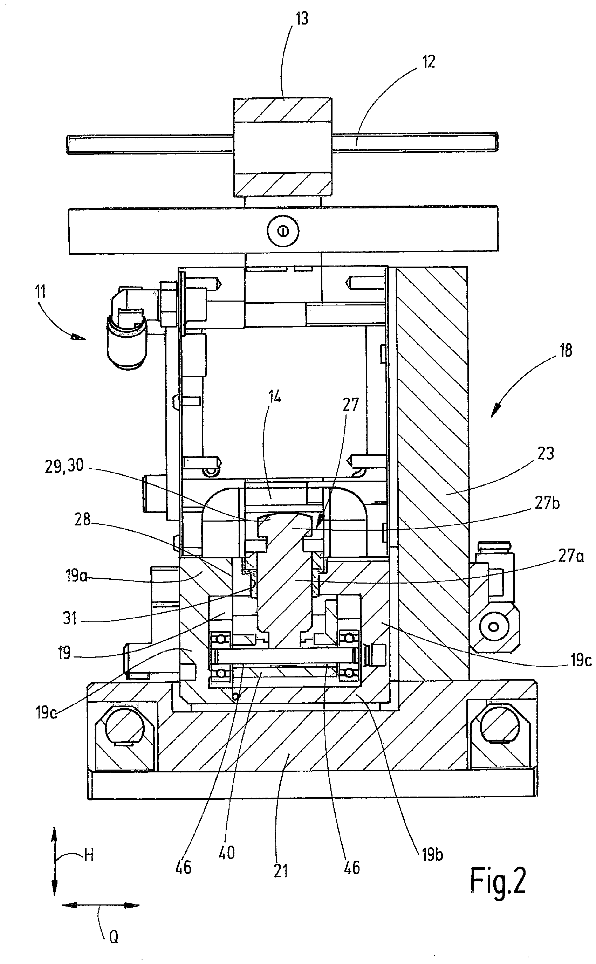

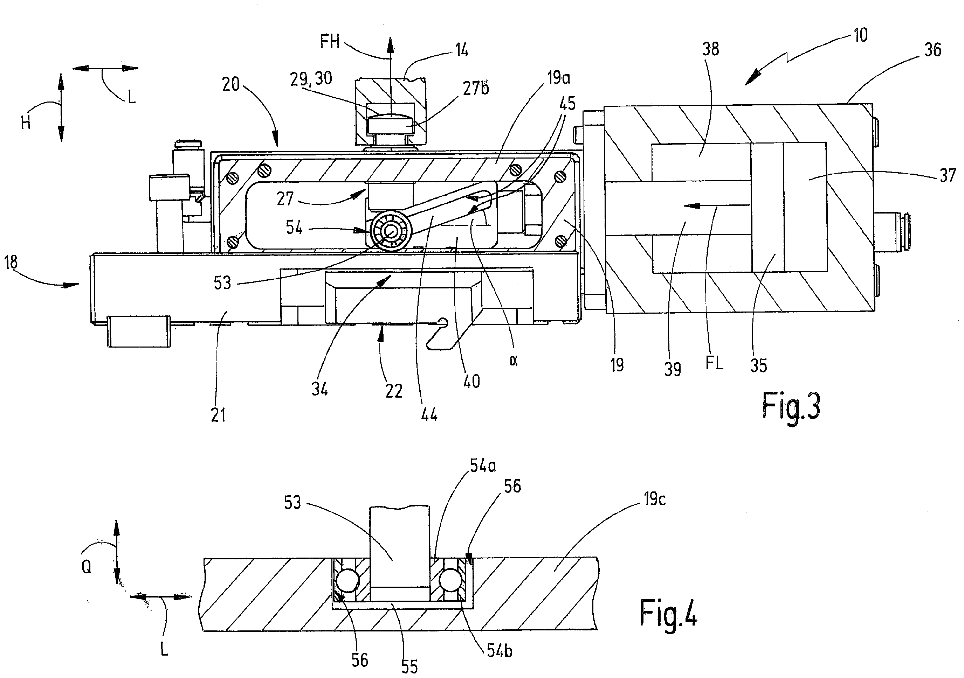

Die Erfindung betrifft eine Betätigungsvorrichtung 10 zum Betätigen einer Lünette 11. Die Lünette 11 weist wenigstens einen und beim Ausführungsbeispiel drei Backen 12 auf, die zwischen einer ein Werkstück 13 beaufschlagenden Abstützstellung oder Klemmstellung und einer vom Werkstück 13 entfernten Lösestellung (in Fig. 1 dargestellt) bewegbar sind. Zur Bewegung der Backen 12 zwischen der Abstützstellung und der Lösestellung weist die Lünette 11 ein Eingangsteil 14 (Fig. 2 und 3) auf. Die Bewegung des Eingangsteils 14 wird durch ein nicht veranschaulichtes Lünettengetriebe in eine Bewegung der Backen 12 umgesetzt.

Für die Betätigungsvorrichtung 10 dient das Eingangsteil 14, das üblicherweise unmittelbar durch einen Hydraulikzylinder betätigt wird, als Eingangsschnittstelle.

Die Betätigungsvorrichtung 10 weist einen Träger 18 auf, der bei dem hier beschriebenen Ausführungsbeispiel ein Gehäuse 19 enthält. An dem Gehäuse 19 ist an einer oberen Wand 19a eine Anbringungsseite 20 vorhanden, die zur Anbringung der Lünette 11 eingerichtet ist. Das Eingangsteil 14 ist dabei von der Anbringungsseite 20 her zugänglich. Der Träger 18 weist beim Ausführungsbeispiel außerdem eine Grundplatte 21 auf, mittels der die Betätigungsvorrichtung 10 mitsamt der Lünette 11 an einer Werkzeugmaschine angeordnet werden kann. Die Grundplatte 21 kann hierfür eine Befestigungseinrichtung 22 aufweisen. Die Grundplatte 21 erstreckt sich beispielsgemäß in einer Querrichtung Q sowie einer Längsrichtung L. Das Gehäuse 19 ist mit einer der oberen Wand 19a entgegengesetzten unteren Wand 19b auf der Grundplatte 21 angeordnet. Neben dem Gehäuse 19 kann der Träger eine Stützplatte 23 aufweisen, die mit der Grundplatte 21 verbunden ist und sich ausgehend von der Grundplatte 21 in einer Höhenrichtung H erstreckt. Das Gehäuse 19 und/oder die Lünette 11 können an der Stützplatte 23 befestigt sein (Fig. 2).

Die Betätigungsvorrichtung 10 weist ein in Höhenrichtung H bewegbar an dem Träger 18 und beispielsgemäß am Gehäuse 19 gelagertes Betätigungsteil 27 auf. Die obere Wand 19a hat dazu eine Durchgangsöffnung 28. In der Durchgangsöffnung 28 ist eine Gleitlagerstelle gebildet, in der das Betätigungsteil 27 in Höhenrichtung H bewegbar gelagert ist. Zu diesem Zweck ist eine Gleitlagerbuchse 31 in die Durchgangsöffnung 28 eingesetzt, die das Betätigungsteil 27 in Umfangsrichtung um die Höhenrichtung H umschließt. Die Gleitlagerbuchse 31 ist in den Fig. 2 und 5-7 veranschaulicht. Es ist zu erkennen, dass die Höhe der Gleitlagerbuchse 31 in Höhenrichtung H kürzer ist als ein zylindrischer Abschnitt 27a des Betätigungsteils 27.

Ein äußeres Ende 27b des Betätigungsteils 27 ist außerhalb des Gehäuses 19 angeordnet und weist eine Verbindungseinrichtung 29 auf, die dazu vorgesehen und eingerichtet ist, das Betätigungsteil 27 mit dem Eingangsteil 14 der Lünette 11 zu koppeln. Bei dem hier beschriebenen Ausführungsbeispiel ist die Verbindungseinrichtung 29 durch die Form des äußeren Endes 27b realisiert, das beispielsgemäß einen Pilzkopf 30 bildet. Das Eingangsteil 14 hat eine daran angepasste Kontur, die den Pilzkopf 30 umgreifen kann, was in den Fig. 2 und 3 schematisch dargestellt ist. Dadurch kann eine Bewegungskopplung zwischen dem Betätigungsteil 27 und dem Eingangsteil 14 in Höhenrichtung H mittels der Verbindungseinrichtung 29 hergestellt werden. Die Verbindungseinrichtung 29 kann auch durch andere form- und/oder kraftschlüssige Verbindungsmittel gebildet sein.

Das Betätigungsteil 27 weist ein dem äußeren Ende 27b in Höhenrichtung H entgegengesetztes inneres Ende 27c auf, das innerhalb des Gehäuses 19 angeordnet ist. Das innere Ende 27c des Betätigungsteils 27 ist über eine Kopplungseinrichtung 34 mit einem Kolben 35 eines Pneumatikzylinders 36 gekoppelt. Der Pneumatikzylinder 36 ist als doppelt wirkender Zylinder mit einer ersten Arbeitskammer 37 und einer zweiten Arbeitskammer 38 ausgeführt (Fig. 3). Der Kolben 35 trennt die beiden Arbeitskammern 37, 38 fluidisch voneinander. Der Kolben 35 ist in Längsrichtung L bewegbar im Zylindergehäuse des Pneumatikzylinders 36 angeordnet und mit einer Kolbenstange 39 verbunden, die sich aus dem Zylindergehäuse des Pneumatikzylinders 36 heraus in Längsrichtung L erstreckt und an ihrem dem Kolben 35 entgegengesetzten Ende mit einem Schieber 40 der Kopplungseinrichtung 34 verbunden ist. Der Schieber 40 ist in Längsrichtung L relativ zur Kolbenstange 39 unbeweglich mit dieser verbunden. Der Kolben 35, die Kolbenstange 39 und der Schieber 40 bilden somit eine Einheit, die sich abhängig von der Druckbeaufschlagung in den Arbeitskammern 37, 38 gemeinsam in Längsrichtung L bewegen kann.

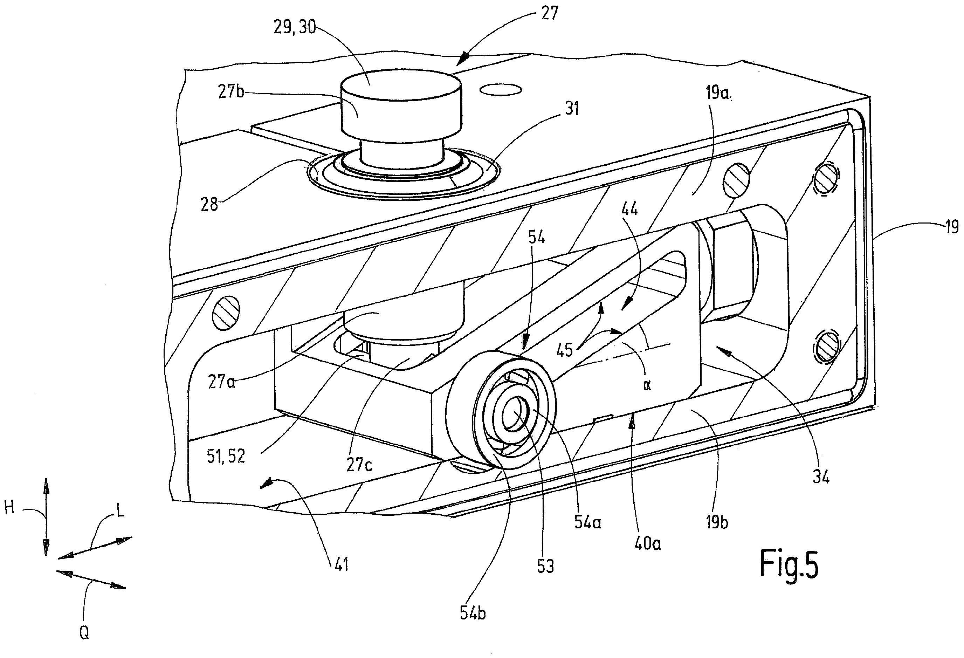

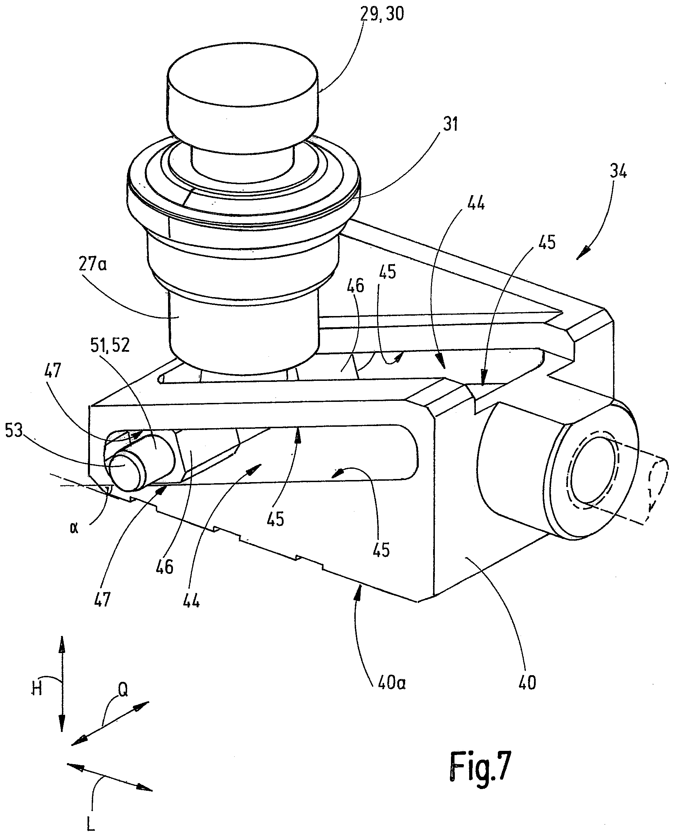

Der Schieber 40 ist insbesondere in den Fig. 5 und 7 veranschaulicht. Eine Unterseite 40a des Schiebers liegt gleitend auf einer Lauffläche 41 im Inneren des Gehäuses 19 auf. Die Lauffläche 41 ist an der unteren Wand 19b des Gehäuses 19 angeordnet oder durch die untere Wand 19b gebildet. Die Gleitpaarung zwischen der Unterseite 40a und der Lauffläche 41 ist beispielsgemäß so eingestellt, dass sich eine geeignete Gleitreibungskraft bzw. Haftreibungskraft ergibt, die der vom Pneumatikzylinder 36 bereitgestellten, in Längsrichtung L wirkenden Pneumatikkraft FL entgegen gerichtet ist. Bei dem hier beschriebenen Ausführungsbeispiel ist sowohl die Lauffläche 41, als auch die Unterseite 40a des Schiebers 40 nitriert. Das Gehäuse 19 und der Schieber 40 sind jeweils aus Metall bzw. einer Metalllegierung hergestellt. Es ist auch möglich, das Gehäuse 19 insgesamt bzw. den Schieber 40 insgesamt zu nitrieren.

Die Unterseite 40a und die Lauffläche 41 erstrecken sich jeweils in einer Ebene, die durch die Längsrichtung L und die Querrichtung Q aufgespannt ist.

Der Schieber 40 hat mit Blickrichtung in Querrichtung Q eine in etwa keilförmige Gestalt. Er weist wenigstens eine und beim Ausführungsbeispiel zwei Kulissen 44 auf. Die beiden Kulissen 44 sind in Querrichtung Q mit Abstand zueinander angeordnet. Jede Kulisse 44 ist durch zwei sich gegenüberliegende Kulissenflächen 45 begrenzt, die einander zugewandt sind. Die beiden Kulissenflächen 45 können beispielsweise durch sich gegenüberliegende Nutflanken gebildet sein. Bei dem hier beschriebenen Ausführungsbeispiel ist jede Kulisse 44 durch einen Schlitz gebildet, der in Querrichtung Q zu beiden Seiten hin offen ist. Die Schlitze bzw. Kulissen 44 sind in Querrichtung Q betrachtet fluchtend zueinander angeordnet. In Höhenrichtung H haben die beiden Kulissenflächen 45 einer Kulisse 44 einen Abstand zueinander und begrenzen den die Kulisse 44 bildenden Schlitz.

Jede Kulisse 44 bzw. die beiden Kulissenflächen 45 definieren eine Kulissenbahn, entlang der ein der Kulisse 44 zugeordnetes Kulissenelement 46 verschiebbar geführt am Schieber 40 angeordnet ist. Jeder Kulisse 44 ist ein separates Kulissenelement 46 zugeordnet. Bei dem hier dargestellten Ausführungsbeispiel haben die Kulissenelemente 46 eine im Wesentlichen quaderförmige oder quaderähnliche Kontur. Das Kulissenelement 46 liegt mit jeweils einer Elementfläche 47 an den beiden Kulissenflächen 45 der zugeordneten Kulisse 44 an.

Die Kulissenbahn ist beim Ausführungsbeispiel geradlinig und gegenüber der Längsrichtung L geneigt. Die Kulissenflächen 45 jeder Kulisse 44 erstrecken sich jeweils in einer Ebene, die parallel zur Querrichtung Q ausgerichtet ist, jedoch gegenüber der Längsrichtung L und der Höhenrichtung H geneigt ist. Dadurch erhält die Kulissenbahn einen Neigungswinkel $\alpha$ gegenüber der Ebene, die durch die Längsrichtung L und die Querrichtung Q aufgespannt ist bzw. gegenüber der Unterseite 40a des Schiebers 40 der Neigungswinkel $\alpha$ ist kleiner als 45° und bevorzugt kleiner als 30°. Beim Ausführungsbeispiel ist der Neigungswinkel $\alpha$ kleiner als 20° und beträgt beispielsgemäß 18°.

Mit dem inneren Ende 27c des Betätigungsteils 27 ist eine Abstützeinrichtung 50 verbunden. Zu der Abstützeinrichtung 50 gehört ein Abstützteil 51, das beispielsgemäß durch einen zylindrischen Stift 52 gebildet ist. Das Abstützteil 51 erstreckt sich in Querrichtung Q auf beiden Seiten vom inneren Ende 27c des Betätigungsteils 27 weg. Hierfür kann in dem inneren Ende 27c beispielsweise ein Durchgangsloch vorhanden sein, durch das der Stift 52 hindurch gesteckt wird.

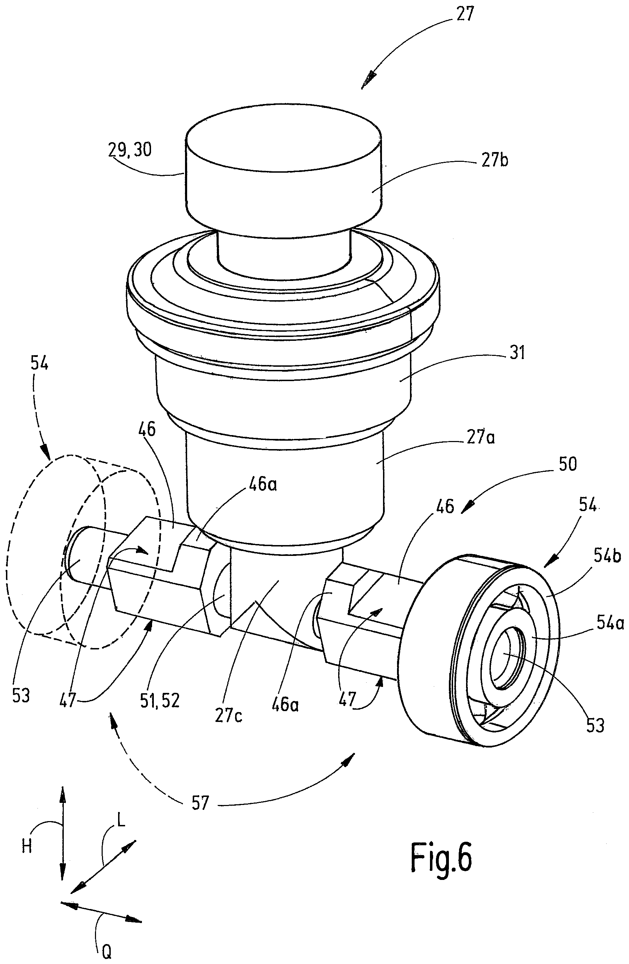

An jedem freien Ende 53 des Abstützteils 51 ist jeweils ein Wälzlager 54 angeordnet. Das Wälzlager 54 kann von einem Kugellager gebildet sein. Beispielsgemäß wird ein Rillenkugellager als Wälzlager 54 verwendet. In Fig. 6 ist lediglich eines der beiden Wälzlager 54 veranschaulicht, während das jeweils andere Wälzlager 54 nur schematisch gestrichelt angedeutet ist. Ein innerer Ring 54a jedes Wälzlagers 54 ist drehfest mit dem zugeordneten freien Ende 53 des Abstützteils verbunden. Ein äußerer Ring 54b jedes Wälzlagers 54 ist drehbar gegenüber dem betreffenden inneren Ring 54a gelagert und stützt sich am Träger 18 und beispielsgemäß am Gehäuse 19 ab. Hierfür ist in Seitenwänden 19c des Gehäuses, die jeweils die obere Wand 19a mit der unteren Wand 19b auf in Querrichtung Q gegenüberliegenden Seiten verbinden, jeweils eine in Höhenrichtung H verlaufende Nut 55 eingebracht. Die Nut 55 ist in Querrichtung Q offen und erstreckt sich in Höhenrichtung H in der Seitenwand 19c. In Längsrichtung L liegen sich zwei Stützflächen 56 der Nut 55, die durch die Nutflanken gebildet sind, mit Abstand gegenüber, wobei der Abstand etwas größer ist als der Außendurchmesser des äußeren Rings 54b des Wälzlagers 54. Die beiden Stützflächen 56 erstrecken sich somit rechtwinklig zur Längsrichtung L. Jedes Wälzlager 54 ist teilweise oder vollständig in einer zugeordneten Nut 55 angeordnet, so dass sich der äußere Ring 54b an jeweils einer der beiden Stützflächen 56 abstützt und bei einer Bewegung des Betätigungsteils 27 in Höhenrichtung H an der betreffenden Stützfläche 56 abrollt.

Die Wälzlager 54 bilden somit eine Wälzlageranordnung 57, mittels der die Abstützeinrichtung 50 das innere Ende 27c des Betätigungsteils 27 in Längsrichtung L abstützt, um eine Bewegung des inneren Endes 27c des Betätigungsteils 27 in Längsrichtung L zu begrenzen bzw. abgesehen von einem erforderlichen minimalen Spiel zu vermeiden. Dadurch wird ein Kippen des Betätigungsteils 27 vermieden.

Wie sich insbesondere aus den Fig. 6 und 7 ergibt, trägt das Abstützteil 51 bzw. der Stift 52 auch die beiden Kulissenelemente 46. Es ist auch möglich, die Kulissenelemente 46 integral ohne Naht- und Fügestelle mit dem Abstützteil 51 bzw. dem Betätigungsteil 27 auszubilden.

Bei dem hier beschriebenen Ausführungsbeispiel weisen die Kulissenelemente 46 sich in Querrichtung Q erstreckende Durchgangslöcher auf, durch die sich das Abstützteil 51 und beispielsgemäß der Stift 52 hindurch erstreckt. Dabei durchgreift das Abstützteil 51 bzw. der Stift 52 auch die jeweilige Kulisse 44, so dass sich sein freies Ende 53 in Querrichtung Q außerhalb der Kulisse 44 neben dem Schieber 40 befindet. Mit diesem freien Ende 53 wird dann das jeweilige Wälzlager 54 verbunden.

Die Kulissenelemente 46 können in Querrichtung Q verschiebbar auf dem Stift 52 angeordnet sein. Zur Positionierung der Kulissenelemente 46 kann benachbart zu einer der Elementflächen 47 ein hervorstehender Anschlag 46a vorhanden sein, der am Schieber 40 anliegt und ein Verschieben des Kulissenelements 46 in Querrichtung Q vom inneren Ende 27c des Betätigungsteils 27 weg verhindert bzw. begrenzt. Eine Verschiebebewegung des Kulissenelements 46 in Querrichtung Q zum inneren Ende 27c hin wird durch das innere Ende 27c selbst begrenzt.

Das Gehäuse 19 ist beispielsgemäß fluiddicht ausgeführt. An den Verbindungsstellen des Gehäuses 19 mit der Lünette 11 und dem Pneumatikzylinder 36 kann jeweils eine Dichtungseinrichtung zwischengeschaltet sein, um die Verbindungen abzudichten und ein Eindringen von Kühlmedium, Schmutzpartikeln, Spänen oder anderen Fremdkörpern in das Gehäuse 19 und die zu den bewegten Bestandteilen an den Verbindungsstellen zu verhindern.

Die Betätigungsvorrichtung 10 zur Betätigung der Lünette 11 arbeitet wie folgt:
Die Arbeitskammern 37, 38 des Pneumatikzylinders werden zur Betätigung der Backen 12 der Lünette 11 mit einem entsprechenden Luftdruck beaufschlagt. Der Druck in den Arbeitskammern 37, 38 beträgt mindestens 1 bar und maximal 6 bar. Wenn die erste Arbeitskammer 37 mit Druck beaufschlagt wird, wird die Kolbenstange 39 aus dem Zylindergehäuse des Pneumatikzylinders 36 heraus gedrängt und wenn die zweite Arbeitskammer 38 mit Druck beaufschlagt wird, wird die Kolbenstange 39 in das Zylindergehäuse des Pneumatikzylinders 36 hinein gedrängt. Der Pneumatikzylinder 36 stellt in Längsrichtung L eine Pneumatikkraft FL bereit, die auf den Schieber 40 einwirkt und den Schieber 40 entsprechend in Längsrichtung L drängt oder verschiebt. Durch eine Verschiebebewegung des Schiebers 40 gleiten die Kulissenelemente 46 in der jeweils zugeordneten Kulisse 44 entlang der unter dem Neigungswinkel α geneigten Kulissenbahn an dem Schieber 40 entlang, wodurch eine Bewegung des Betätigungsteils 27 in Höhenrichtung H hervorgerufen werden kann. Wird durch die Last der Lünette 11 bzw. des Eingangsteils 14 eine Bewegung des Betätigungsteils 27 verhindert, wird mit Hilfe der Kopplungseinrichtung 34 die Pneumatikkraft FL in eine Betätigungskraft FH auf das Betätigungsteil 27 in Höhenrichtung H übersetzt. Die Betätigungskraft FH ist betragsmäßig größer als die Pneumatikkraft FL. Der Zusammenhang zwischen den Kräften ist durch folgende Gleichung gegeben:

$$FH = FL \left(\sin \alpha\right)\left(\cos \alpha\right)$$

Zur Betätigung der Lünette ist ein Sollwert $FH_{Soll}$ für die Betätigungskraft FH vorgegeben. Der Pneumatikzylinder stellt eine vorgegebene maximale Pneumatikkraft $FL_{max}$ bereit. Der Neigungswinkel α ist beispielsgemäß zumindest 2 bis 3° Grad kleiner, als es zur Erzielung des Sollwerts $FH_{Soll}$ für die Betätigungskraft FH bei einer gegebenen maximalen Pneumatikkraft $FL_{max}$ erforderlich wäre. Somit gilt:

$$FH_{soll} < FL_{max} \left(\sin \alpha\right)\left(\cos \alpha\right).$$

Durch diese Maßnahme können Reibungskräfte in der Kopplungseinrichtung 34 ausgeglichen werden, die wiederum vorhanden sind, um ein sanftes Ausfahren und Einfahren des Betätigungsteils 27 bzw. der Kolbenstange 39 sicherzustellen, auch wenn die durch die Lünette 11 gegebene Last bzw. Gegenkraft gering ist.

Mittels der Abstützeinrichtung 50 wird ein Kippen des Betätigungsteils 27 gegenüber der Höhenrichtung H verhindert. Das innere Ende 27c ist über die Abstützeinrichtung 50 und beispielsgemäß die Wälzlageranordnung 27 in Längsrichtung L am Träger 18 und beim Ausführungsbeispiel am Gehäuse 19 abgestützt. Dadurch wird vermieden, dass das Betätigungsteil 27 in der Gleitlagerbuchse 31 verkantet, was zum Einen zu einem erhöhten Verschleiß führen kann und zum Anderen eine ausreichende Betätigungskraft FH in Höhenrichtung H verhindern könnte.

Die vorliegende Erfindung betrifft eine Betätigungsvorrichtung 10 zum Betätigen von Backen 12 einer Lünette 11, mit denen ein Werkstück 13 geklemmt bzw. abgestützt werden kann. Die Betätigungsvorrichtung hat einen Träger 18 mit einer Anbringungsseite 20, an der die Lünette 11 angebracht werden kann. Ein äußeres Ende 27b eines Betätigungsteils 27 ragt von der Anbringungsseite 20 des Trägers 18 weg und weist eine Verbindungseinrichtung 29 als Schnittstelle zur Verbindung mit einem Eingangsteil 14 der Lünette 11 auf. Ein inneres Ende 27c des Betätigungsteils 27 ist über eine Kopplungseinrichtung 34 mit einem Kolben 35 eines Pneumatikzylinders 36 bewegungsgekoppelt. Die Kopplungseinrichtung 34 weist einen unbeweglich mit dem Kolben 35 verbundenen Schieber 40 auf, an dem wenigstens eine Kulisse 44 vorhanden ist. Die Kulisse 44 definiert eine schräg zur Längsrichtung L und zur Höhenrichtung H ausgerichtete Kulissenbahn, entlang der wenigstens ein Kulissenelement 46 geführt bewegbar ist. Das Kulissenelement ist mit dem inneren Ende 27c des Betätigungsteils 27 verbunden.

Bezugszeichenliste:

| | |
|---|---|
| 10 | Betätigungsvorrichtung |
| 11 | Lünette |
| 12 | Backe |
| 13 | Werkstück |
| 14 | Eingangsteil |
| | |
| 18 | Träger |
| 19 | Gehäuse |
| 19a | obere Wand des Gehäuses |
| 19b | untere Wand des Gehäuses |
| 19c | Seitenwand |
| 20 | Anbringungsseite |
| 21 | Grundplatte |
| 22 | Befestigungseinrichtung |
| 23 | Stützplatte |
| | |
| 27 | Betätigungsteil |
| 27a | zylindrischer Abschnitt des Betätigungsteils |
| 27b | äußeres Ende |
| 28 | Durchgangsöffnung |
| 29 | Verbindungseinrichtung |
| 30 | Pilzkopf |
| 31 | Gleitbuchse |
| | |
| 34 | Kopplungseinrichtung |
| 35 | Kolben |
| 36 | Pneumatikzylinder |
| 37 | erste Arbeitskammer |
| 38 | zweite Arbeitskammer |
| 39 | Kolbenstange |
| 40 | Schieber |
| 40a | Unterseite des Schiebers |
| | |
| 44 | Kulisse |
| 45 | Kulissenfläche |
| 46 | Kulissenelement |
| 46a | Anschlag |
| 47 | Elementfläche |
| | |
| 50 | Abstützeinrichtung |
| 51 | Abstützteil |
| 52 | Stift |
| 53 | freies Ende des Abstützteils |
| 54 | Wälzlager |
| 54a | innerer Ring |
| 54b | äußerer Ring |
| 55 | Nut |
| 56 | Stützfläche |
| 57 | Wälzlageranordnung |
| | |
| α | Neigungswinkel |
| FH | Betätigungskraft |
| FL | Pneumatikkraft |
| H | Höhenrichtung |
| L | Längsrichtung |
| Q | Querrichtung |

**Patentansprüche**

1. Betätigungsvorrichtung (10) für eine Lünette (11) zum Abstützen und/oder Klemmen eines Werkstücks (13),
mit einem Träger (18), der eine Anbringungsseite (20) aufweist, die dazu eingerichtet ist, die Lünette (11) anzubringen,
mit einem Betätigungsteil (27), das an dem Träger (18) in einer Höhenrichtung (H) bewegbar gelagert ist und an einem äußeren Ende (27b) eine Verbindungseinrichtung (29) zur Verbindung mit einem Eingangsteil (14) der Lünette (11) aufweist, wobei das Betätigungsteil (27) an seinem inneren Ende (27c) eine Abstützeinrichtung (50) aufweist, mittels der das Betätigungsteil (27) in Längsrichtung (L) am Träger (18) abgestützt ist und die Abstützeinrichtung (50) eine Wälzlageranordnung (57) aufweist, die eine Wälzlagerung zwischen einem Abstützteil (51) der Abstützeinrichtung (50) und dem Träger (18) bereitstellt,
mit einem an dem Träger (18) befestigten doppelt wirkenden Pneumatikzylinder (36), dessen Kolben (35) über eine Kopplungseinrichtung (34) mit dem Betätigungsteil (27) bewegungsgekoppelt ist,
wobei die Kopplungseinrichtung (34) einen mit dem Kolben (35) verbundenen Schieber (40) aufweist, der in einer Längsrichtung (L) rechtwinkelig zu der Höhenrichtung (F) bewegbar an dem Träger (18) gelagert ist und der wenigstens eine schräg zu der Längsrichtung (L) und zu der Höhenrichtung (H) verlaufende Kulisse (44) aufweist, die eine Kulissenbahn definiert, entlang der wenigstens ein Kulissenelement (46) der Kopplungseinrichtung (34) geführt bewegbar angeordnet ist, wobei die Kulissenbahn mit der Längsrichtung (L) einen Neigungswinkel (α) einschließt, der kleiner ist als 45°,
und wobei das Betätigungsteil (27) an einem dem äußeren Ende (27b) entgegengesetzten inneren Ende (27c) mit dem Kulissenelement (36) verbunden ist.

2. Betätigungsvorrichtung nach Anspruch 1, **dadurch gekennzeichnet, dass** das Betätigungsteil (27) mit einer in Höhenrichtung (H) wirkenden, vorgegebenen Betätigungskraft (FH$_{soll}$)

betätigt wird, dass der Pneumatikzylinder (36) in Längsrichtung (L) eine vorgegebene Pneumatikkraft ($FL_{max}$) bereitstellt und dass der Neigungswinkel ($\alpha$) so vorgegeben ist, dass folgende Gleichung erfüllt ist: $FH_{soll} < FL_{max}$ (sin $\alpha$) (cos $\alpha$).

3. Betätigungsvorrichtung nach Anspruch 1 oder 2, **dadurch gekennzeichnet, dass** der Schieber (40) zwei in einer Querrichtung (Q) rechtwinkelig zu der Längsrichtung (L) und zu der Höhenrichtung (H) mit Abstand zueinander angeordnete Kulissen (44) aufweist.

4. Betätigungsvorrichtung nach einem der vorhergehenden Ansprüche, **dadurch gekennzeichnet, dass** das Betätigungsteil (27) in Höhenrichtung (H) oberhalb des Schiebers (40) mittels einer Gleitlagerbuchse (31) an dem Träger (18) gelagert ist.

5. Betätigungsvorrichtung nach einem der vorhergehenden Ansprüche, **dadurch gekennzeichnet, dass** sich das Abstützteil (51) in einer Querrichtung (Q) rechtwinkelig zu der Längsrichtung (L) und zu der Höhenrichtung (H) von dem inneren Ende (27c) des Betätigungsteils (27) auf zwei Seiten weg erstreckt.

6. Betätigungsvorrichtung nach Anspruch 3 und nach Anspruch 5, **dadurch gekennzeichnet, dass** sich das Betätigungsteil (27) in beide Kulissen (44) hinein oder durch beide Kulissen (44) hindurch erstreckt.

7. Betätigungsvorrichtung nach einem der vorhergehenden Ansprüche, **dadurch gekennzeichnet, dass** die Wälzlageranordnung (57) zwei in einer Querrichtung (Q) rechtwinkelig zu der Längsrichtung (L) und zu der Höhenrichtung (H) mit Abstand zueinander angeordnete Wälzlager (54) aufweist.

8. Betätigungsvorrichtung nach einem der vorhergehenden Ansprüche, **dadurch gekennzeichnet, dass** sich jedes Wälzlager (54) der Wälzlageranordnung (57) an wenigstens einer Stützfläche (56) abstützt, die rechtwinkelig zu der Längsrichtung (L) ausgerichtet ist.

9. Betätigungsvorrichtung nach einem der vorhergehenden Ansprüche, **dadurch gekennzeichnet, dass** der Schieber (40) mit einer Unterseite (40a) gleitend verschiebbar auf einer Lauffläche (41) gelagert ist.

10. Betätigungsvorrichtung nach Anspruch 9, **dadurch gekennzeichnet, dass** die Unterseite (40a) des Schieber (40) und/oder die Lauffläche (41) nitriert ist.

11. Betätigungsvorrichtung nach einem der vorhergehenden Ansprüche, **dadurch gekennzeichnet, dass** der Träger (18) ein geschlossenes Gehäuse (19) aufweist, in dem der Schieber (40) angeordnet ist.

12. Betätigungsvorrichtung nach einem der vorhergehenden Ansprüche, **dadurch gekennzeichnet, dass** der Neigungswinkel ($\alpha$) der wenigstens einen Kulisse (44) konstant ist.

13. Betätigungsvorrichtung nach einem der vorhergehenden Ansprüche, **dadurch gekennzeichnet, dass** die wenigstens eine Kulisse (44) zwei parallel zueinander verlaufende Kulissenflächen (45) aufweist, die die Kulissenbahn definieren und zwischen denen das zugeordnete Kulissenelement (46) angeordnet ist.

**Claims**

1. Actuating device (10) for a steady rest (11), for supporting and/or clamping of a workpiece (13),
   with a carrier (18) having an attachment side (20) which is configured for attachment of the steady rest (11),
   with an actuating part (27) which is mounted on the carrier (18) so as to be movable in the height direction (H), and at an outer end (27b) has a connection device (29) for connection to an input part (14) of the steady rest (11), wherein the inner end (27c) of the actuating part (27) has a supporting device (50) by means of which the actuating part (27) is supported on the carrier (18) in the length direction (L), and the supporting device (50) comprises a roller bearing arrangement (57) which provides a roller-bearing mounting between a supporting part (51) of the supporting device (50) and the carrier (18),
   with a dual-action pneumatic cylinder (36) attached to the carrier (18), the piston (35) of which is movably coupled to the actuating part (27) via a coupling device (34), wherein the coupling device (34) has a slide (40) which is connected to the piston (35) and is mounted on the carrier (18) so as to be movable in a length direction (L) at right angles to the height direction (H), and which has at least one sliding block guide (44) running obliquely relative to the length direction (L) and the height direction (H), and defining a sliding block track along which the at least one sliding block element (46) of the coupling device (34) is movable in a guided manner, wherein the sliding block track encloses an angle of inclination ($\alpha$) with the length direction (L) which is smaller than 45°, and wherein the actuating part (27) is connected to the sliding block element (36) at an inner end (27c) opposite the outer end (27b).

2. Actuating device according to claim 1, **characterised in that** the actuating part (27) is actuated with a predefined actuation force ($FH_{soll}$) acting in a height direction (H), that the pneumatic cylinder (36) provides a predefined pneumatic force ($FL_{max}$) in the length direction (L), and that the angle of inclination ($\alpha$) is preset such that the following equation is fulfilled: $FH_{soll} < FL_{max} (sin\ \alpha)(cos\ \alpha)$.

3. Actuating device according to claim 1 or 2, **characterised in that** the slide (40) has two sliding block guides (44) spaced apart from each other in a transverse direction (Q) at right angles to the length direction (L) and to the height direction (H).

4. Actuating device according to any of the preceding claims, **characterised in that** the actuating part (27) is mounted on the carrier (18) by means of a plain bearing bush (31) above the slide (40) in the height direction (H).

5. Actuating device according to any of the preceding claims, **characterised in that** the supporting part (51) extends on two sides away from the inner end (27c) of the actuating part (27) in a transverse direction (Q) at right angles to the length direction (L) and to the height direction (H).

6. Actuating device according to claim 3 and claim 5, **characterised in that** the actuating part (27) extends into both sliding block guides (44) or through both sliding block guides (44).

7. Actuating device according to any of the preceding claims, **characterised in that** the roller bearing arrangement (57) has two roller bearings (54) spaced apart from each other in the transverse direction (Q) at right angles to the length direction (L) and to the height direction (H).

8. Actuating device according to any of the preceding claims, **characterised in that** each roller bearing (54) of the roller bearing arrangement (57) is supported on at least one support face (56) oriented at right angles to the length direction (L).

9. Actuating device according to any of the preceding claims, **characterised in that** the slide (40) is mounted so that its underside (40a) is slidingly displaceable on a running surface (41).

10. Actuating device according to claim 9, **characterised in that** the underside (40a) of the slide (40) and/or the running surface (41) are nitrided.

11. Actuating device according to any of the preceding claims, **characterised in that** the carrier (18) has a closed housing (19) in which the slide (40) is arranged.

12. Actuating device according to any of the preceding claims, **characterised in that** the angle of inclination ($\alpha$) of the at least one sliding block guide (44) is constant.

13. Actuating device according to any of the preceding claims, **characterised in that** the at least one sliding block guide (44) has two sliding block guide faces (45) running parallel to each other which define the sliding block track, and between which the assigned sliding block element (46) is arranged.

**Revendications**

1. Dispositif d'actionnement (10) pour une lunette (11) destinée à l'appui et/ou au serrage d'une pièce à usiner (13),
comprenant un support (18) qui présente un côté de fixation (20) conçu pour fixer la lunette (11),
comprenant un élément d'actionnement (27) qui est monté sur le support (18) avec possibilité de déplacement dans le sens de la hauteur (H) et présente, à une extrémité extérieure (27b), un dispositif de liaison (29) destiné à une liaison avec un élément d'entrée (14) de la lunette (11), l'élément d'actionnement (27) présentant, à son extrémité intérieure (27c), un dispositif d'appui (50) à l'aide duquel l'élément d'actionnement (27) est en appui sur le support (18) dans le sens longitudinal (L), et le dispositif d'appui (50) présentant un ensemble de paliers à roulement (57) qui assure un support à roulement entre un élément d'appui (51) du dispositif d'appui (50) et le support (18),
comprenant un vérin pneumatique double effet (36) qui est fixé au support (18) et dont le piston (35) est couplé du point de vue du mouvement à l'élément d'actionnement (27), par l'intermédiaire d'un dispositif de couplage (34),
le dispositif de couplage (34) présentant un coulisseau (40) qui est relié au piston (35) et est monté sur le support (18) avec possibilité de déplacement dans un sens longitudinal (L), à angle droit par rapport au sens de la hauteur (F), et qui présente au moins une coulisse (44) qui s'étend en biais par rapport à la direction longitudinale (L) et au sens de la hauteur (H) et qui définit une glissière de coulisse le long de laquelle au moins un élément de coulisse (46) du dispositif de couplage (34) est disposé en étant guidé avec possibilité de déplacement, la glissière de coulisse formant avec la direction longitudinale (L) un angle d'inclinaison (a) qui est inférieur à 45°,

et l'élément d'actionnement (27) étant relié à l'élément de coulisse (36) par une extrémité intérieure (27c) opposée à l'extrémité extérieure (27).

2. Dispositif d'actionnement selon la revendication 1, **caractérisé en ce que** l'élément d'actionnement (27) est activé avec une force d'actionnement ($FH_{soll}$) prédéterminée agissant dans le sens de la hauteur (H), **en ce que** le vérin pneumatique (36) fournit une force pneumatique ($FL_{max}$) prédéterminée, dans la direction longitudinale (L), et **en ce que** l'angle d'inclinaison (a) est prédéfini de manière à satisfaire à l'équation suivante : $FH_{soll} < FL_{max}(\sin \alpha)(\cos \alpha)$.

3. Dispositif d'actionnement selon la revendication 1 ou 2, **caractérisé en ce que** le coulisseau (40) présente deux coulisses (44) qui sont disposées à distance l'une de l'autre dans une direction transversale (Q), à angle droit par rapport à la direction longitudinale (L) et par rapport au sens de la hauteur (H).

4. Dispositif d'actionnement selon l'une des revendications précédentes, **caractérisé en ce que** l'élément d'actionnement (27) est monté sur le support (18) à l'aide d'un coussinet de palier lisse (31), au-dessus du coulisseau (40) dans le sens de la hauteur (H).

5. Dispositif d'actionnement selon l'une des revendications précédentes, **caractérisé en ce que** l'élément d'appui (51) s'étend sur deux côtés à partir de l'extrémité intérieure (27c) de l'élément d'actionnement (27), dans une direction transversale (Q), à angle droit par rapport à la direction longitudinale (L) et par rapport au sens de la hauteur (H).

6. Dispositif d'actionnement selon la revendication 3 et selon la revendication 5, **caractérisé en ce que** l'élément d'actionnement (27) s'étend dans les deux coulisses (44) ou à travers les deux coulisses (44).

7. Dispositif d'actionnement selon l'une des revendications précédentes, **caractérisé en ce que** l'ensemble de paliers à roulement (57) présente deux paliers à roulement (54) disposés à distance l'un de l'autre dans une direction transversale (Q), à angle droit par rapport à la direction longitudinale (L) et par rapport au sens de la hauteur (H).

8. Dispositif d'actionnement selon l'une des revendications précédentes, **caractérisé en ce que** chaque palier à roulement (54) de l'ensemble de paliers à roulement (57) est en appui sur au moins une surface d'appui (56) qui est orientée à angle droit par rapport à la direction longitudinale (L).

9. Dispositif d'actionnement selon l'une des revendications précédentes, **caractérisé en ce que** le coulisseau (40) est monté sur une surface de déplacement (41), avec possibilité de déplacement glissant par le biais de sa face inférieure (40a).

10. Dispositif d'actionnement selon la revendication 9, **caractérisé en ce que** la face inférieure (40a) du coulisseau (40) et/ou la surface de déplacement (41) est soumise à une nitruration.

11. Dispositif d'actionnement selon l'une des revendications précédentes, **caractérisé en ce que** le support (18) présente un boîtier (19) fermé dans lequel est disposé le coulisseau (40).

12. Dispositif d'actionnement selon l'une des revendications précédentes, **caractérisé en ce que** l'angle d'inclinaison ($\alpha$) de la coulisse, (44), au nombre d'au moins une, est constant.

13. Dispositif d'actionnement selon l'une des revendications précédentes, **caractérisé en ce que** la coulisse (44), au nombre d'au moins une, présente deux surfaces de coulisse (45) qui s'étendent parallèlement l'une à l'autre et définissent la glissière de coulisse, et entre lesquelles est disposé l'élément de coulisse (46) associé.

Fig.1

EP 3 347 161 B1

Fig.2

12

Fig.3

Fig.4

EP 3 347 161 B1

Fig.5

EP 3 347 161 B1

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60208835 T2
- US 6257972 B1